Europäisches Patentamt

European Patent Office

Office européen des brevets

(11) Veröffentlichungsnummer: **0 322 699**
**A2**

## (12) EUROPÄISCHE PATENTANMELDUNG

(21) Anmeldenummer: **88121219.5**

(22) Anmeldetag: **19.12.88**

(51) Int. Cl.⁴: **B60L 5/20**

(30) Priorität: **24.12.87 DE 8716985 U**

(43) Veröffentlichungstag der Anmeldung:
**05.07.89 Patentblatt 89/27**

(84) Benannte Vertragsstaaten:
**AT CH DE ES FR GB IT LI SE**

(71) Anmelder: **Schunk Kohlenstofftechnik GmbH**
**Rodheimer Strasse 59**
**D-6301 Heuchelheim(DE)**

(72) Erfinder: **Wiessler, Ulrich, Dr.**
**Blankenfeld 52**
**D-6330 Wetzlar(DE)**
Erfinder: **Haus, Horst**
**Himbergstrasse 13**
**D-6301 Biebertal(DE)**

(74) Vertreter: **Sternagel, Hans-Günther, Dr. et al**
**Patentanwälte Dr. Michael Hann Dr. H.-G.**
**Sternagel Sander Aue 30**
**D-5060 Bergisch Gladbach 2(DE)**

(54) **Kohleschleifstück.**

(57) Schleifstück für Bahnstromabnehmer mit einer Kohleschleifleiste (1), die auf der Unterseite über die gesamte Länge eine schwalbenschwanzförmige Ausnehmung aufweist, und mit einer metallischen Fassung, wobei zur galvanischen, von der mechanischen Verbindung unabhängigen Verbindung der Kohleleiste (1) mit der Fassung in die Ausnehmung eine flexible Anschlußleitung (2) eingelegt ist, die mit einer galvanischen Metallschicht (3) fixiert ist. Die flexible Anschlußleitung (2) kann ein Metallgewebeband oder eine Metallfolie sein, die länger als die Kohleleiste (1) ist und über die gesamte Länge oder nahezu gesamte Länge der Kohleleiste 81) in die Ausnehmung eingeklemmt ist.

EP 0 322 699 A2

## Kohleschleifstück

Die Erfindung betrifft ein Kohleschleifstück für Bahnstromabnehmer, insbesondere die konstruktive Gestaltung einer von der mechanischen Verbindung von Kohleleiste und Fassung getrennten elektrischen Verbindung zwischen Fassung und Kohleleiste.

Aus AT-B-209 376 ist eine Klemmfassung für Kohleschleifstücke bekannt, bei der zur kraftschlüssigen Verbindung zwischen Kohle und Träger Gummielemente so angeordnet sind, daß sie durch ihre Feder- bzw. Klemmwirkung die Kohle mechanisch und elektrisch mit dem Träger verbinden.

In DE-B-697 808 ist eine Kohleschleifleiste mit einem galvanischen Metallüberzug an der dem Stromabnehmerbügel zugekehrten Seite für elektrische Bahnen beschrieben. Die Kohleschleifleiste hat eine oder mehrere Aussparungen zur Aufnahme von den elektrischen Strom leitenden Anschlußlitzen. Die Litzen sind mit dem Kohleschleifstück durch Lötung zwischen zwei galvanisch aufgebrachten Metallschichten, insbesondere Kupferschichten, verbunden. Die Aussparung(en) der Kohleschleifleiste hat eine Erweiterung zur Aufnahme einer Verankerung der Litze. Die seitlich aus Schleifleiste herausgeführte freiliegende Litze hat jedoch den Nachteil, daß sie herausgerissen oder durch langandauernde Vibration durchgetrennt werden kann, so daß die elektrische Verbindung unterbrochen ist.

Derartige Kohleschleifstücke mit der galvanisch metallisierten Unterseite der Kohleleiste aufgelöteten flexiblen Metallbändern sind auch aus DE-B-34 05 674 bekannt. Auf die mit einer metallischen Schicht überzogene Unterseite der Kohleleiste wird eine flexible Anschlußleitung angelötet. Die Anschlußleitung, die sowohl eine Metallfolie oder ein Metallgewebeband sein kann, ist länger als die Kohleleiste und wird innerhalb der Fassung geführt und innenliegend mit der Fassung fest verbunden. Der bei dieser Ausführung erforderliche Arbeitsgang "Anlöten der flexiblen Anschlußleitung an die Kohleleiste" ist relativ kostenintensiv. Der elektrische Kontakt zur Fassung geschieht durch Verschrauben, Vernieten, Verlöten oder Verschweißen.

Die Verbindung von Kohleschleifleiste zur Fassung kann mittels Klebefolie oder über eine rein mechanische Klemmung geschehen. Nachteil dieser Konstruktion sind der hohe Bearbeitungsaufwand und die damit verbundenen hohen Herstellkosten.

Aufgabe der Erfindung ist es, eine konstruktive Gestaltung von Kohleschleifstücken für Bahnstromabnehmer zu schaffen, die kostengünstiger hergestellt werden kann, als die aus DE-B-34 05 674 bekante Ausführungsform.

Diese Aufgabe wird gelöst durch ein Schleifstück für Bahnstromabnehmer mit einer Kohleschleifleiste, die auf der Unterseite eine über die gesamte Länge laufende Ausnehmung und eine auf der Unterseite galvanisch abgelagerte Metallschicht aufweist und mit einer metallischen Fassung, wobei zur galvanisch, von der mechanischen Verbindung unabhängigen Verbindung der Kohleleiste mit der Fassung an der Metallschicht ein Metallgewebeband oder eine Metallfolie als flexible Anschlußleitung vorhanden ist, und die dadurch gekennzeichnet ist, daß die Ausnehmung in der Kohleleiste schwalbenschwanzförmig ausgebildet ist, wobei die geringere Breite der Ausnehmung sich an der Oberfläche der Kohleleiste befindet und die flexible Anschlußleitung in diese Ausnehmung eingeklemmt ist und daß die flexible Anschlußleitung durch die auf die gesamte oder nahezu gesamte Oberfläche auf der Unterseite der Kohleschleifleiste aufgebrachte, galvanisch abgeschiedene Metallschicht mit der Kohleschleifleiste mechanisch verbunden ist.

Die überstehenden Enden des flexiblen Metallbandes können sowohl in der Fassung als auch an den Enden der Fassung mechanisch befestigt werden, um den elektrischen Kontakt herzustellen. Das feste Verbinden des flexiblen Metallbandes mit der Fassung kann durch Verschrauben, Vernieten, Verlöten oder Verschweißen erfolgen.

Es wurde festgestellt, daß der in der DE-B-34 05 674 erreichte Vorteil eines großflächigen elektrischen Kontaktes und der damit verbundene geringe Übergangswiderstand, das dadurch erreicht wird, daß die Unterseite der Kohleschleifleiste galvanisch mit einer Metallschicht überzogen wird, auf die dann die flexible Anschlußleitung gelötet wird, auch durch die erfindungsgemäße geänderte Schichtfolge, nämlich Aufbringen der galvanischen abgeschiedenen Metallschicht nach Montage der flexiblen Anschlußleitung, erzielt wird. Dazu wird in eine schwalbenschwanzförmige Nut, die über die gesamte Länge der Kohleschleifleiste, vorzugsweise in der Mitte, verläuft, eine flexible Anschlußleitung, vorzugsweise ein Metallgewebeband, eingeklemmt. Die Ausnehmung an der Kohleschleifleiste kann durch Ausfräsen oder durch Formpressen der Ausgansmasse hergestellt werden.

Der Querschnitt der flexiblen Anschlußleitung richtet sich nach der zu erwartenden elektrischen Belastung. Daran angepaßt wird die schwalbenschwänzförmige Ausnehmung. Breite und Tiefe müssen so bemessen sein, daß die flexible Anschlußleitung nach dem Einpressen nicht über die Unterseite der Kohleschleifleiste herausragt und einem mechanisch festen Sitz aufweist.

Die flexible Anschlußleitung kann über die gesamte Länge der Kohleschleifleiste in die Ausnehmung eingelegt sein oder über nahezu die gesamte Länge. In beiden Fällen is es vorteilhaft, die flexible Anschlußleitung länger als die Kohleschleifleiste vorzusehen, so daß das oder die Enden der Anschlußleitung zur elektrischen Kontaktierung im Fassungsendbereich genutzt werden können.

Die Montage des flexiblen Metallbandes in die schwalbenschwanzförmige Nut der Kohleschleifleiste kann von Hand oder durch eine mechanische Einrichtung erfolgen. Daher wird das flexible Metallband durch eine längs der Nut laufende Rolle oder durch einen Druckstempel, der die gesamte Länge der Nut einschließt eingepreßt.

Die zu galvanisierende Oberfläche der Kohleschleifleiste wird vor der galvanischen Behandlung mechanisch aufgerauht und entstaubt. Die galvanische Metallschicht besteht aus Kupfer. Die wird vorzugsweise bei einer Stromstärke von 40-50 A während einer Behandlungszeit von 2,0-2,5 Std. abgeschieden. Die Metallschicht weist dann eine Schichtstärke von 1-2/10 mm auf. In Versuchen konnte gezeigt werden, daß diese über die Oberfläche der Unterseite der Kohleschleifleiste mit montierter flexibler Anschlußleitung aufgebrachte galvanische Metallschicht eine gute und völlig ausreichende mechanische und elektrische Verbindung zwischen Anschlußleitung und Kohleschleifleiste gewährleistet.

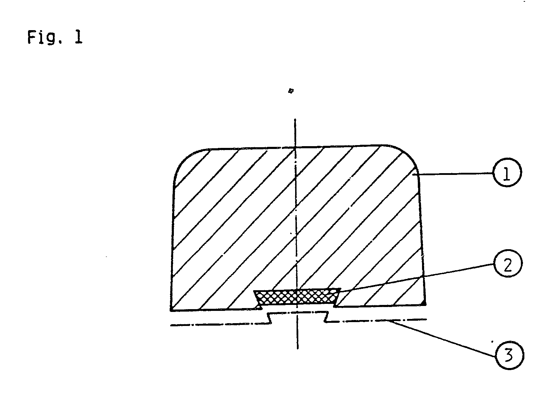

Fig. 1 zeigt eine Kohleschleifleiste (1) im Querschnitt mit in schwalbenschwanzförmiger Ausnehmung eingelegter flexibler Anschlußleitung (2) und auf der Unterseite galvanisch abgeschiedener Metallschicht (3).

Für den Stromübergang Kohleschleifleiste/Anschlußleitung steht die nahezu gesamte Unterseite der Kohleschleifleiste zur Verfügung.

Die Befestigung der Kohleschleifleiste auf der Fassung, die vorzugsweise aus Aluminium besteht, erfolgt durch eine Klebung mit einem dauerelastischen Kleber oder durch eine rein mechanische Klemmung.

## Ansprüche

Schleifstück für Bahnstromabnehmer mit einer Kohleschleifleiste (1), die auf der Unterseite eine über die gesamte Länge laufende Ausnehmung und eine auf der Unterseite galvanisch abgelagerte Metallschicht (3) aufweist und mit einer metallischen Fassung, wobei zur galvanisch, von der mechanischen Verbindung unabhängigen Verbindung der Kohleleiste (1) mit der Fassung an der Metallschicht (3) ein Metallgewebeband oder eine Metallfolie als flexible Anschlußleitung (2) vorhanden ist, **gekennzeichnet durch** daß die Ausnehmung in der Kohleleiste schwalbenschwanzförmig ausgebildet ist, wobei die geringere Breite der Ausnehmung sich an der Oberfläche der Kohleleiste (1) befindet und die flexible Anschlußleitung (2) in diese Ausnehmung eingeklemmt ist und daß die flexible Anschlußleitung (2) durch die auf die gesamte oder nahezu gesamte Oberfläche auf der Unterseite der Kohleschleifleiste (1) aufgebrachte, galvanisch abgeschiedene Metallschicht (3) mit der Kohleschleifleiste (1) mechanisch verbunden ist.

Fig. 1